# EUROPEAN PATENT SPECIFICATION

(11) **EP 2 842 041 B1**
(45) Date of publication and mention of the grant of the patent: **23.01.2019**
(21) Application number: 12875463.7
(22) Date of filing: 23.04.2012
(51) Int. Cl.: G06F 21/54, G06F 21/52, G06F 21/71, G06F 9/30, G06F 12/16

(54) **DATA PROCESSING SYSTEM AND METHOD FOR OPERATING A DATA PROCESSING SYSTEM**
DATENVERARBEITUNGSSYSTEM UND VERFAHREN ZUM BETREIBEN EINES DATENVERARBEITUNGSSYSTEMS
SYSTÈME DE TRAITEMENT DE DONNÉES ET PROCÉDÉ DE FONCTIONNEMENT D'UN SYSTÈME DE TRAITEMENT DE DONNÉES

(43) Date of publication of application: 04.03.2015
(73) Proprietor: NXP USA, Inc., Austin TX 78735 (US)
(72) Inventor: COSTIN, Daniel, Ionel, 050687 Bucharest (RO)
(74) Representative: Pomper, Till
(86) International application number: PCT/IB2012/052037
(87) International publication number: WO 2013/160724

(56) References cited:
- US-A1- 2004 103 252
- US-A1- 2004 168 078
- US-A1- 2006 161 739
- US-A1- 2008 271 142
- US-A1- 2008 301 420
- US-A1- 2009 187 748
- US-B1- 7 581 089

## Description

### Field of the invention

This invention relates to a data processing system and a method for operating a data processing system.

### Background of the invention

Modern data processing systems often perform programs in the form of sequences of logical operations. During the execution of the program, the data processing system usually dynamically stores variables as well as return addresses in a continuous memory section. The stored return addresses are related to the control of the program flow. The continuous memory section that is used for storing the variables and the return addresses is called a program stack because the program dynamically stacks information in it during program execution.

The variables and the return addresses are stored mixed in a last in, first out scheme. Each variable and each return address that is stored on the stack has its own predetermined memory size. An attempt to write something to a variable that exceeds this predetermined memory size may lead to an overwriting of adjacent memory locations that are reserved for different variables or return addresses. The overwriting may change the content of the stack in an unintended way. In particular, the overwriting may change a return address that is stored on the stack. This may cause serious errors, change the program flow, and may be used to gain the control of the program, for example, for executing arbitrary program code. Overwriting return addresses stored on the stack is called a "stack smashing attack".

United States Patent 5,949,973 shows a method that includes the relocating of the entire stack to a random memory location. The original stack area is subsequently erased. United States Patent 6,941,473 shows a method that inserts a special guard variable just before the return address to protect the return address. The guard variable is checked to prove that the protected return address is not modified. United States Patent 7,581,089 shows a method for protecting a return address on a data processing system that is based on the creation of two stacks. The first stack is the normal stack, and the second stack is a shadow. The shadow has shadow frames containing a copy of the return address upon a subroutine call. Before returning from a subroutine, the return address from the stack and the copy of the return address from the shadow are compared, and if they do not match, the shadow is searched for a matching return address

United States patent application US 2009/187748 A1 relates to a computer system, which comprises a CPU capable of executing machine readable instructions. A program stack holds inter alia parameters, return addresses, stack frame pointers and local variables. A hidden content addressable memory (CAM) is employed, which is only accessible by the CPU. The CAM is used to store a Return Address Copy (RAC) register. The RAC may be loaded with a stack return address, which allows verifying a stack return address for alternation.

United States patent application US 2008/301420 A1 relates to a processing unit with an instruction pipeline. Each instruction is split into a sequence of dependent steps. The first step is always to fetch the instruction (IF stage) from memory; the final step is always the instruction completion (CO stage). A conditional branch may involve a hazard. The patent application suggests a branch prediction to prevent from stalling the processing unit. The processing unit includes a speculative return address stack, RAS, and a post-execution RAS. The speculative fetch RAS is a return address stack storing a speculatively predicted address. The post-execution RAS is a return address stack storing an address on which an instruction fetch is executed. On a return instruction, the following instructions are fetched based on the speculatively predicted address generated before in response to a call / jump instruction. The speculatively predicted address from the speculative fetch RAS is verified at the execution stage against the address stored in the post-execution RAS to determine whether there is a miss branch prediction. In response to a determined miss branch prediction, the instructions fetched based on the speculatively predicted address are invalidated. The instructions fetched based on the speculatively predicted address are not yet completed, which means that the invalidation thereof has no lasting effect on the instruction sequence.

### Summary of the invention

The present invention provides a data processing system and a method for operating a data processing system as described in the accompanying claims.

Specific embodiments of the invention are set forth in the dependent claims.

These and other aspects of the invention will be apparent from and elucidated with reference to the embodiments described hereinafter.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
Figure 1 schematically shows an example of an embodiment of a data processing system.
Figure 2 schematically shows an example of an embodiment of a second memory.
Figure 3 schematically shows an example for the branching of a program.
Figure 4 shows an example of a program that is vulnerable to a stack smashing attack.
Figure 5 shows an example of a program stack of a program that is vulnerable to a stack smashing attack at two different times.
Figure 6 shows an exemplary flow diagram to explain an exemplary interaction of basic functions of an embodiment of a data processing system.

### Detailed description of the preferred embodiments

Because the illustrated embodiments of the present invention may for the most part, be implemented using electronic components and circuits known to those skilled in the art, details will not be explained in any greater extent than that considered necessary as illustrated, for the understanding and appreciation of the underlying concepts of the present invention and in order not to obfuscate or distract from the teachings of the present invention.

Although the definition of terms hereinafter used should not be construed as limiting, the terms as used are understood to comprise at least the following.

In the context of this specification, the term "data processing system" may be used for a plurality of electronic components that may be arranged to execute a program.

The term "program" may be used for a sequence of logical instructions that may be executed by a data processing system.

The term "processing unit" may describe a programmable or non-programmable device for executing a sequence of logical operations. The processing unit may be part of a data processing system.

The term "memory" may be used for a plurality of identical memory cells that may be accessed via a common memory controller. The memory controller may be part of a data processing system.

The term "address space" may be used for a set of address codes, wherein each address code may be used for accessing a specific memory cell of the memory. The address code for a specific memory cell may, for example, be an integer. A set of consecutive integers may define a continuous address space.

The term "offset" may be used for a number or code that may be added to an address code for gaining an altered address code. The address code may be related to a specific memory cell. The altered address code may be related to a different memory cell that may be accessed via the altered address code. The offset may, for example, be an integer. Adding the offset to the original address code may generate a new integer that may be a valid address code in the address space.

The term "jump instruction" may be used for a logical instruction within a program that may, for example, cause a non-sequential program flow. A non-sequential program flow may, for example, occur when a function or subroutine is called. The jump instruction may alter a program pointer that indicates a logical instruction that will be executed next.

The term "return instruction" may, for example, be used for a logical instruction that may, for example, be executed at the end of a function or a subroutine for returning to a logical instruction that is subsequent to a previous jump instruction. The return instruction may alter a program pointer.

The term "program stack" may be used for a memory section that is dynamically allocated to the program. The program stack may, for example, be used for storing variables and return addresses that may be generated by the program at run time.

The term "exception message" may be used for a message or logical signal within the data processing system that may be generated when an exception occurs during execution of the program. An exception may, for example, be an event which occurs during execution of the program that may disrupt the normal, intended flow of the program's instructions.

The term "logfile" may be used for a data file in which the program may store events, such as access or data manipulations, as they occur to serve as an audit trail, diagnostic device, or security measure.

The term "write access" may be used for an access to a memory. The write access may alter the information stored in the memory. In machine code, i.e., the generic instructions that can be executed directly by the data processing system, the write access may be defined by a plurality of similar write instructions, information that should be written to the memory, and a starting address code that defines a starting point of the write access. The plurality of similar write instructions may, for example, be organized as a loop, and the information that should be written to the memory may, for example, be a string having a plurality of characters. The first write instruction may use the starting address code and may write the first character of the string into the memory. The second write instruction may use the starting address code with an offset of one and may write the second character of the string into the memory, and so on.

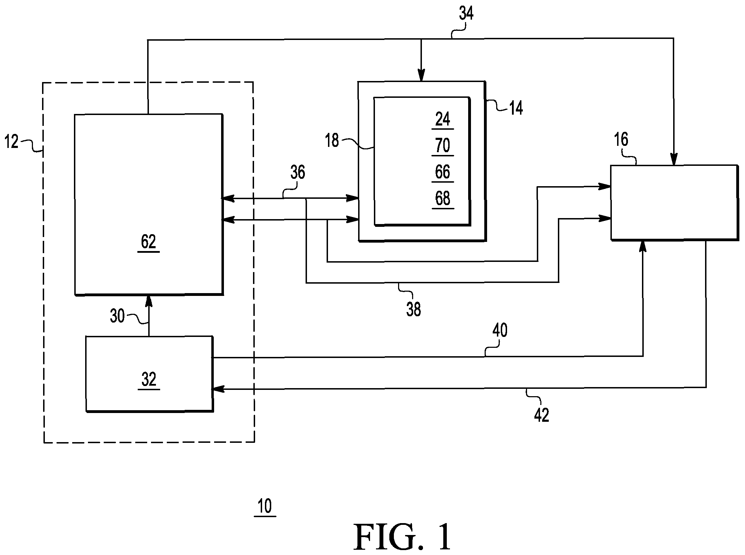

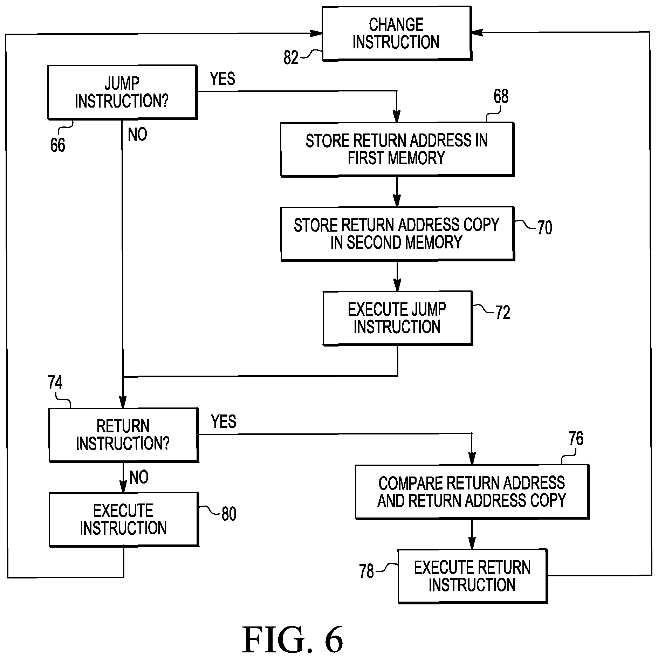

Referring to Figure 1, an example of an embodiment of a data processing system 10 is schematically shown. An exemple of the interaction of basic functions of the data processing system 10 will be explained later in connection with Figure 6. The data processing system 10 may comprise a processing unit 12, a first memory 14, and a second memory 16. The first memory 14 may, for example, have a first address space. The second memory 16 may, for example, have a second address space. The data processing system 10 may be arranged to hardware protect the second memory 16 when a write access to the first memory 14 is executed. The processing unit 12 may be arranged to access the first memory 14 and the second memory 16. For example, the processing unit 12 may comprise at least one memory controller.

Hardware protecting the second memory 14 may be realized in several different ways. In a general way, hardware protecting the second memory 16 may describe that addresses of the second address space may not be obtained and/or accessed and/or written to by manipulating and/or overflowing a starting address of the write access to the first memory 14, e.g., by adding an offset to addresses of the first address space when a write access to the first memory 14 is executed. This may, for example, be realized by using two different instructions for accessing the first memory 14 and the second memory 16, wherein the two instructions do not only differ in their arguments, i.e., the address codes. Checking address codes for complying with allowed address boundaries before a write instruction is executed may not be necessary. The difference may be realized by using different address code structures for the first memory 14 and the second memory 16 in machine code or by using completely different write instructions for the first memory 14 and the second memory 16 in machine code. Generally, the data processing system 10 may be arranged such that a write access writing data, e.g., a string, having an arbitrary length to the first memory 14 may never reach to the second memory 16.

Hardware protecting the second memory 16 may, for example, be achieved by physically separating the first memory 14 from the second memory 16 and/or accessing the first memory 14 and the second memory 16 via two different memory controllers.

Accessing the first memory 14 and the second memory 16 may, for example, be realized via a control bus 34, an address bus 36, and a data bus 38. The control bus 34 may, for example, control a general I/O process for read/write accesses to the first memory 14 and to the second memory 16. The address bus 36 may, for example, provide address codes that are related to read/write accesses to the first memory 14 and to the second memory 16. The data bus 38 may, for example, control data that may be written to or read from the first memory 14 and the second memory 16.

The processing unit 12 may, for example, comprise a core 62 and a hardware logic unit 32. The hardware logic unit 32 may be a separate unit. Alternatively, other parts of the processing unit 12, for example, the core 62 of the processing unit 12, may have the unit 32 integrated. The hardware logic unit 32 may, for example, be arranged to access the second memory 16 via an inquiry bus 40 and may be arranged to receive data from the second memory 16 directly via a result bus 42. The hardware logic unit 32 may use the inquiry bus 40 for searching the second memory 16, as will be explained later. The result of an inquiry via the inquiry bus 40 may, for example, be sent back to the hardware logic unit 32 via the result bus 42. The inquiry bus 40 and the result bus 42 may be optional features of the data processing system 10. The processing unit 12 may be arranged to generate an exception message 30 when the return address and the return address copy are not identical. The hardware logic unit 32 may generate the exception message 30 that may, for example, be processed by the core 62 of the processing unit 12.

The processing unit 12 may comprise more than one core. When the processing unit 12 comprises a plurality of cores 62, a plurality of second memories 16 may be provided, wherein each of the second memories 16 is dedicated to one of the plurality of cores 62. The size of the second memory 16 may be adapted based on the number of return addresses that may be simultaneously stored, i.e., the maximal number of nested jump instructions.

The data processing system 10 may execute a program 18. The program 18 may comprise a sequence of logical instructions. The logical instructions may be executed by the processing unit 12. When the data processing system 10 executes the program 18, a program pointer may indicate the logical instruction that may be executed next, as will be explained later. The program 18 may comprise at least one jump instruction and at least one return instruction.

The program 18 may, for example, comprise a code segment 68, a heap segment 66, and a program stack 24. The processing unit 12 may be arranged to store the program stack 24 in the first memory 14. The processing unit 12 may be arranged to store other parts of the program 18, i.e., the code segment 68 and the heap segment 66, in the first memory 14. The code segment 68 may, for example, comprise the sequence of logical operations. The heap segment 66 may, for example, comprise variables that are allocated during an initialization of the program 18, i.e., when the program 18 starts. The program stack 24 may, for example, comprise variables and return addresses that may be dynamically stored on the program stack 24.

During the program initialization, a continuous memory section of the first memory 14 may be allocated to the program 18. The continuous memory section may be accessed via a set of consecutive address codes. The code segment 68, the heap segment 66, and the program stack 24 may be arranged in this continuous memory section. For example, the code segment 68 may have the lowest address codes. The heap segment 66 may be directly adjacent to the code segment 68. The heap segment 66 may have address codes that are higher than the address codes for the code segment 68. The heap segment 66 may "grow" from low address codes to high address codes during initialization of the program 18. The program stack 24 may have the highest address codes. The program stack 24 may "grow" during runtime from high address codes to low address codes, i.e., towards the heap segment 66.

An empty memory section 70 may be located between the heap segment 66 and the program stack 24. The empty memory section 70 may, for example, be memory allocated to the program 18 during initialization. The empty memory section 70 may be partly allocated to the program stack 24 at runtime when the program stack 24 grows. When the program stack 24 shrinks, the empty memory section 70 may grow.

The processing unit 12 may be arranged to store a return address on the program stack 24 and to store a return address copy in the second memory 16 when the at least one jump instruction is executed. The processing unit 12 may be arranged to store the return address copy in a last in, first out scheme (LIFO). Storing the return address copies in a LIFO scheme may provide a generic method for arranging the different return addresses in the second memory 16. When the return instruction is completed, the return address and the return address copy may become surplus. The return address may be deleted from the program stack 24 to save memory, for example, when a called subroutine is finished. In the same way, the return address copy may be deleted from the second memory 16 to save memory. The processing unit 12 may be arranged to delete the return address copy when the return instruction is completed.

The processing unit 12 may be arranged to compare the return address with the return address copy when the at least one return instruction is executed. The hardware logic unit 32 may execute the comparison between the return address and the return address copy. As mentioned before, the processing unit 12 may generate the exception message 30 when the return address and the return address copy are not identical. The processing unit 12 may be arranged to stop the execution of the program 18 when the processing unit 12 generates the exception message 30.

It may be possible that the processing unit 12 continues with the execution of the program 18 before a result of the comparison is complete. In this way, a delay in the execution of the program 18 due to the comparison may be avoided. The processing unit 12 may be arranged to continue the execution of the program 18 based on the return address copy when the processing unit 12 generates the exception message 30. For this purpose, the processing unit 12 may, for example, be arranged to replace the return address with the return address copy when the processing unit 12 generates the exception message 30. The processing unit 12 may be arranged to generate a logfile when the processing unit 12 generates the exception message 30. The logfile may, for example, comprise a core dump.

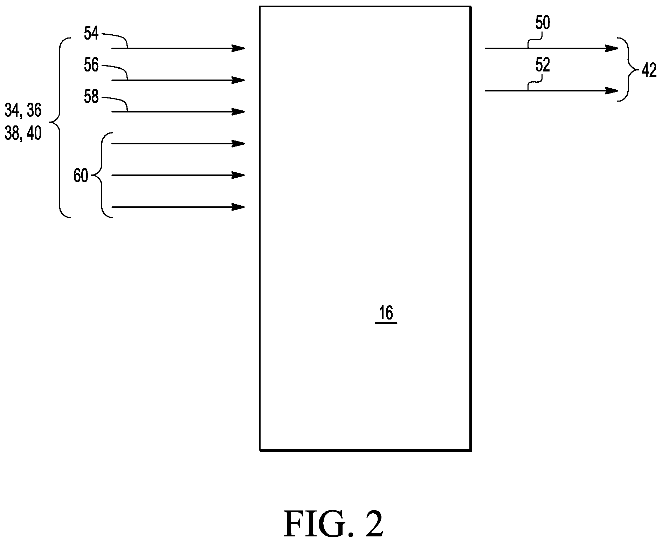

Referring now to Figure 2, an example of an embodiment of a second memory 16 is schematically shown. Figure 2 schematically indicates examples of input and output values of the second memory 16. Input values may, for example, be sent to the second memory 16 via the control bus 34, the address bus 36, the data bus 38, and the inquiry bus 40. These input values may, for example, be data 54, data address code 56, a clock signal 58, and various values related to a read/write access control 60. Output values of the second memory 16 may, for example, be transferred via the result bus 42. It should be understood that normal read accesses via the data bus 38 and the address bus 36 may be possible. Deleting a specific data value from the second memory 16 may, for example, be realized by overwriting the specific data value with a "zero".

The second memory 16 may, for example, be a content addressable memory (CAM) or a random access memory (RAM). The CAM may be designed such that it may simultaneously search its entire content, i.e., the data values stored in it, for a specific provided data value. When the provided data value is found, the CAM may return a list of one or more addresses codes where the specific provided data value may be found. The CAM may return the content of a returned address code or any other associated data value. For a CAM, a read instruction is a search instruction for a matching data value. The CAM may provide the quickest possible search for a specific data value, as will be explained later.

The output values may, for example, be a hit value 50 and a hit address code 52. The hit value 50 may indicate that a specific return address code is stored within the CAM as a return address copy. The hit value 50 may be a logical value. The hit address code 52 may, for example, be the address code within the CAM that is related to the hit value 50. The hit address code 52 may, for example, be a result of an inquiry that was previously sent to the second memory 16 via the inquiry bus 40. The inquiry may, for example, be an address code. The CAM may automatically search for the provided address code. When the second memory 16 is not a CAM, but instead another type of memory, the search for a specific address code in the second memory 16 may need an additional external logic unit that may be provided by the hardware logic unit 32 mentioned in connection with Figure 1.

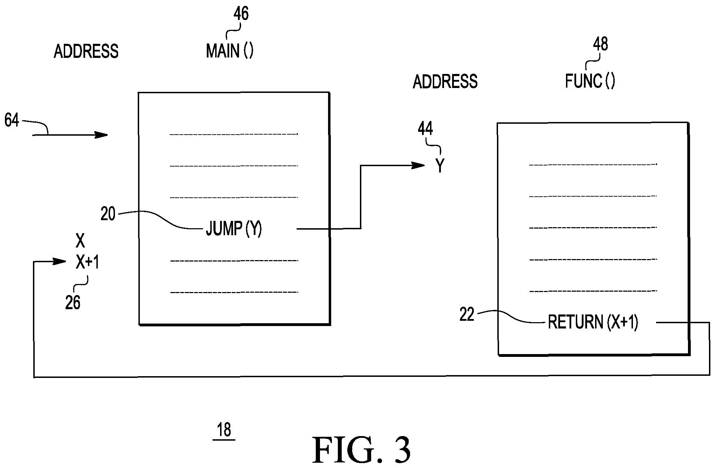

Referring now to Figure 3, an example for the branching of a program 18 is schematically shown. The program 18 may comprise a main section 46 and a subroutine section 48. The main section 46 may comprise a sequence of logical operations. The sequence of logical operations may be arranged consecutively. For example, a jump instruction 20 may be located at an address code X, and a subsequent logical instruction of the main section 46 may be located at an address code X+1. A program pointer 64 may indicate which logical instruction will be executed next. The value of the program pointer 64 may, for example, be an address code. For a normal program flow without branches, loops, and the like, the program pointer 64 may sequentially run through the logical instructions of the main section 46. When the program pointer 64 reaches the jump instruction 20 at the address code X, the value of the program pointer 64 may become a return address code 26. The return address code 26 may be stored in connection with a return instruction 22.

The jump instruction 20 may alter the program pointer 64 from the value X+1 to the new value Y, for example, to execute a function f having its sequence of logical instructions stored in the subroutine section 48 starting with the address code Y. The program pointer 64 may sequentially run through the sequence of logical instructions of the function f to the return instruction 22 associated to the return address code 26.

The return instruction 22 may mark an end of the sequence of the logical instructions of the function f. The return instruction 22 may alter the program pointer 64 to the return address code 26, i.e., to the new value X+1. The program pointer 64 may return to the sequence of logical instructions of the main section 46, and the program flow may continue in the main section 46 at the address code X+1 right behind the jump instruction 20. The sequence of logical operations of the main section 46 and the sequence of logical operations of the subroutine section 48 may be located within the code segment 68 mentioned in connection with Figure 1. The argument of the jump instruction 20 and the argument of the return instruction 22 may be, for example, stored on the program stack 24 mentioned in connection with Figure 1. The data processing system may protect the return address 26 that may be stored on the program stack from being altered by an overflow as will be explained later.

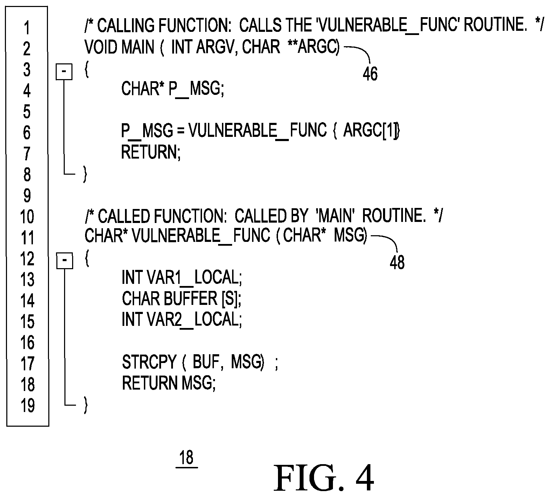

Referring now to Figure 4, an example of a program that is vulnerable to a stack smashing attack is shown. The program 18 may, for example, be described by a listing in program language C. The syntax of the listing may be well known to a person skilled in the art. The program 18 may comprise the main section 48 and the subroutine section 48. The main section 46 may comprise a function call in line 6 that may include a jump instruction to the subroutine section 48. The subroutine section 48 may comprise a further function call. The C-library function "strcpy" may be called at line 17 in the subroutine section 48. The C-library function "strcpy" may have a first argument and a second argument. The first argument and the second argument may be pointers. Each pointer may point to a specific data, for example, the first pointer may point to a first data and the second pointer may point to a second data. For simplicity, the difference between pointer and data is ignored in the following. The first data and the second data may have a first data size and a second data size respectively. The function "strcpy" may copy the second data into the first data without checking whether the second data size is larger or smaller than the first data size. When the second data is larger than the first data size, the second data may be written beyond the first data. An overflow may occur that may corrupt the program stack and may alter the program flow as will be explained in the following.

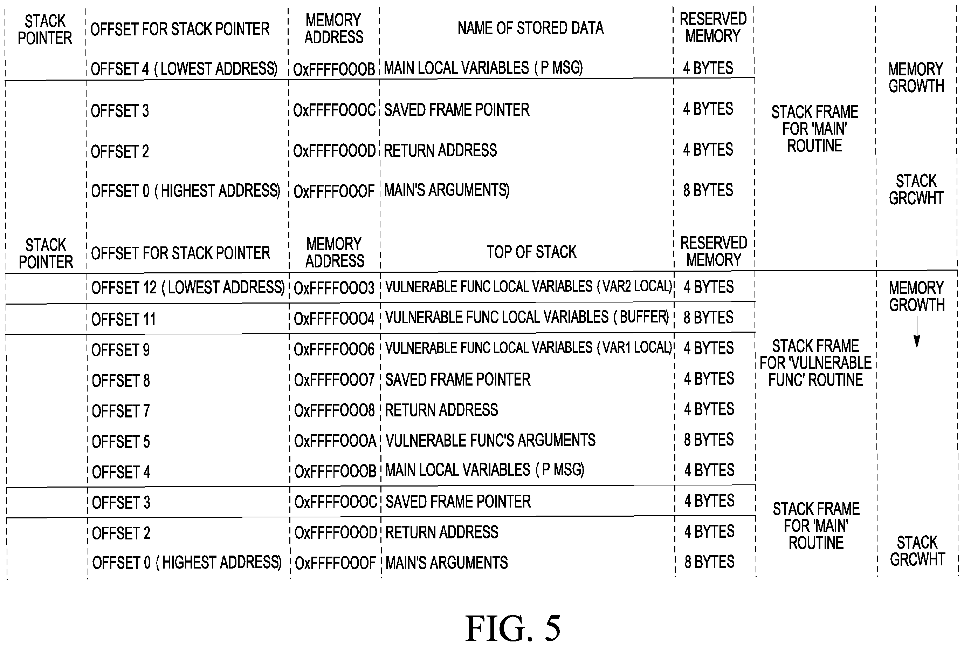

Referring now to Figure 5, an example of a program stack of a program that is vulnerable to an overflow or a stack smashing attack is shown at two different times. The two tables that are shown in Figure 5 may be related to the program 18 shown in Figure 4. The columns from left to right are a program stack pointer, i.e., a pointer that points to the lowest address code occupied by the program stack, an offset for the program stack pointer, a memory address code, a name for stored data, a size of reserved/allocated memory, a name of the program section, and directions for the memory growth and the program stack growth. The offset for the program stack pointer may, for example, be an offset that can be added to the program stack pointer for generating an address code for accessing another data that is stored on the stack. The memory address codes may describe address codes for accessing different data stored on the stack. The memory address codes may be hexadecimal values. The names for stored data may, for example, establish a relation to the listing shown in Figure 4 for better understanding of the program stack. The reserved memory column may indicate the (maximal) size of a specific data stored on the program stack. The memory growth may indicate the direction for increasing address codes. The program stack growth may indicate the direction for the growth of the program stack at runtime. In the example of Figure 5, the program stack may grow to lower address codes.

The first or upper table may be related to a first time when the program is initialized and the function call in line 6 of the program listing is not yet executed. The second or lower table may be related to a second time when the main section has executed the function call. When the program executes the function call, the variables and the return address may be stored on the program stack as shown in the lower table.

The basic principle of the overflow of the stack smashing attack will be explained in the following. The function "strcpy" may copy the data "msg" into the data "buffer" without checking their respective sizes. When the size of "msg" extends the size of "buffer", an overflow may occur, and parts of "msg" may be written into other variables that are stored on the program stack adjacent to "msg". For example, continuous address codes may be used, and the program stack may be altered in the direction of the memory growth. For example, the local variable "var1_local" may be altered by the buffer overflow. When the overflow is large enough, i.e., larger than 4 bytes in this example, the return address may be altered. This may change the program flow. When the return instruction is executed at the end of the function, the program pointer may not return to the main section as intended. The program flow may continue at the altered return address. This may cause serious errors. Checking the integrity of the return address before the return instruction is executed may help to reduce damage caused by an overflow and to prevent a stack smashing attack.

Now referring to Figure 6, an exemplary flow diagram to explain an exemplary interaction of basic functions of an embodiment of a data processing system is shown. It is assumed that the data processing system executes a program comprising a plurality of instructions, at least one jump instruction, and at least one return instruction. The starting point may, for example, be block 82. At block 82, the current instruction that should be executed by the data processing system may change, for example, by advancing of the program pointer. At block 66, the data processing system may check whether the current instruction is a jump instruction. When the current instruction is not a jump instruction, the data processing system may proceed with block 74. At block 74, the data processing system may check whether the current instruction is a return instruction. When the current instruction is not a return instruction, the data processing system may execute the current instruction at block 82. The data processing system may proceed with block 80, for example, by advancing the program pointer. In other words, the data processing system may always check whether the current instruction is a jump instruction or a return instruction before executing it. When the current instruction is neither a jump instruction nor a return instruction, the data processing system may normally execute it.

When the current instruction is a jump instruction, the data processing system may proceed with block 68. At block 68, the data processing system may store the return address, i.e., the value of the program pointer increased by one, in the first memory, as mentioned in connection with Figure 1. At block 70, the data processing system may store a copy of the return address, i.e., the return address copy, in the second memory. The jump instruction may be subsequently executed at block 72. When the jump instruction is completed, the data processing system may proceed with block 74 as shown in Figure 6 or directly proceed with block 82.

When the current instruction is a return instruction, the data processing system may proceed with block 76. At block 76, the data processing system may compare the return address with the return address copy. As mentioned in connection with Figure 1, the comparison may, for example, be executed by the hardware logic unit. The additional check whether the return address and the return address copy are identical may slow down program execution. When the second memory may, for example, be a CAM, the execution of the comparison may be very quick. Searching a CAM may take about 1 or 2 clock cycles. When the second memory is an ordinary random access memory, the search may take longer, and different search strategies known to a person skilled in the art may be applied.

When the return address and the return address copy are identical, the program may continue with block 78. At block 78, the data processing unit may execute the return instruction. When the return instruction is completed, the data processing system may proceed with block 82.

When the return address and the return address copy differ, the data processing system may execute different actions that are not explicitly shown in Figure 6. For example, the data processing system may generate an exception message to signal that the return address is altered. An altered return address may be a sign for a serious error in the executed program or for a hacker attack via a stack smashing method. The exception message may, for example, be generated by the hardware logic unit. It may be possible to directly use an output signal of the second memory as exception message, for example, the hit signal described in connection with Figure 2. The exception message may, for example, be evaluated in the core of the processing unit. When the exception message is generated, the data processing system may stop the execution of the program.

The data processing system may proceed with the execution of the program before the result of the comparison is available. This may lead to a parallel execution of blocks 76 and 78 in Figure 6. The data processing system may execute the return instruction immediately by using the non-validated return address from the first memory. At the same time, the data processing system may search the second memory to check whether the return address and the return address copy are identical. The search may be executed by the hardware logic unit that may be triggered by the execution of the return instruction. When the hardware logic unit detects that the return address is altered, the program execution may be stopped based on the generated exception message that may act as a trap. This may delay the detection of the serious error only by the time needed for the search. The return instruction is executed immediately, and program execution is not delayed when the return address is not altered. The parallel execution of blocks 76 and 78 may allow for a more sophisticated protection of the return address. For example, pairs could be compared, wherein each pair may comprise a program stack address code and a corresponding return address.

When the exception message is generated, the data processing system may continue the execution of the program based on the return address copy. The return address copy may be stored in the second memory, and the address codes of the second memory may not be generated by adding an offset to address codes for the first memory. This may ensure that the return address copy may not be altered by an overflow on the program stack. It may be possible to copy the return address copy back to the first memory to restore the original return address. The return instruction may be normally executed based on the restored return address. When the program execution is continued in spite of an exception message, the processed data may be corrupted, and additional actions for handling corrupted data may be applied.

The invention may also be implemented in a computer program for running on a computer system, at least including code portions for performing steps of a method according to the invention when run on a programmable apparatus, such as a computer system or enabling a programmable apparatus to perform functions of a device or system according to the invention.

A computer program may be a list of instructions such as a particular application program and/or an operating system. The computer program may for instance include one or more of: a subroutine, a function, a procedure, an object method, an object implementation, an executable application, an applet, a servlet, a source code, an object code, a shared library/dynamic load library and/or other sequence of instructions designed for execution on a computer system.

The computer program may be stored internally on computer readable storage medium or transmitted to the computer system via a computer readable transmission medium. All or some of the computer program may be provided on transitory or non-transitory computer readable media permanently, removably or remotely coupled to an information processing system. The computer readable media may include, for example and without limitation, any number of the following: magnetic storage media including disk and tape storage media; optical storage media such as compact disk media (e.g., CD-ROM, CD-R, etc.) and digital video disk storage media; nonvolatile memory storage media including semiconductor-based memory units such as FLASH memory, EEPROM, EPROM, ROM; ferromagnetic digital memories; MRAM; volatile storage media including registers, buffers or caches, main memory, RAM, etc.; and data transmission media including computer networks, point-to-point telecommunication equipment, and carrier wave transmission media, just to name a few.

A computer process typically includes an executing (running) program or portion of a program, current program values and state information, and the resources used by the operating system to manage the execution of the process. An operating system (OS) is the software that manages the sharing of the resources of a computer and provides programmers with an interface used to access those resources. An operating system processes system data and user input, and responds by allocating and managing tasks and internal system resources as a service to users and programs of the system.

The computer system may for instance include at least one processing unit, associated memory and a number of input/output (I/O) devices. When executing the computer program, the computer system processes information according to the computer program and produces resultant output information via I/O devices.

In the foregoing specification, the invention has been described with reference to specific examples of embodiments of the invention. It will, however, be evident that various modifications and changes may be made therein without departing from the scope of the invention as set forth in the appended claims.

Each signal described herein may be designed as positive or negative logic. In the case of a negative logic signal, the signal is active low where the logically true state corresponds to a logic level zero. In the case of a positive logic signal, the signal is active high where the logically true state corresponds to a logic level one. Note that any of the signals described herein can be designed as either negative or positive logic signals. Therefore, in alternate embodiments, those signals described as positive logic signals may be implemented as negative logic signals, and those signals described as negative logic signals may be implemented as positive logic signals.

Furthermore, the terms "assert" or "set" and "negate" (or "deassert" or "clear") are used herein when referring to the rendering of a signal, status bit, or similar apparatus into its logically true or logically false state, respectively. If the logically true state is a logic level one, the logically false state is a logic level zero. And if the logically true state is a logic level zero, the logically false state is a logic level one.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality. For example, the core and the hardware logic unit could be implemented as a single integrated circuitry or alternatively as two or more separate circuitries that may be connected via appropriate connections.

Any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within the same device. For example, the processing unit may comprise at least one memory controller for accessing the first memory and the second memory. The core of the processing unit and the memory controller may be located on a single integrated circuit. Alternatively, the examples may be implemented as any number of separate integrated circuits or separate devices interconnected with each other in a suitable manner. For example, the at least one memory controller, the core of the processing unit, and the hardware logic unit may be implemented as separate integrated circuits.

Also for example, the examples, or portions thereof, may be implemented as soft or code representations of physical circuitry or of logical representations convertible into physical circuitry, such as in a hardware description language of any appropriate type.

Also, the invention is not limited to physical devices or units implemented in non-programmable hardware but can also be applied in programmable devices or units able to perform the desired device functions by operating in accordance with suitable program code, such as mainframes, minicomputers, servers, workstations, personal computers, notepads, personal digital assistants, electronic games, automotive and other embedded systems, cell phones and various other wireless devices, commonly denoted in this application as computer systems'.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements The mere fact that certain measures are recited in mutually different claims does not indicate that a combination of these measures cannot be used to advantage.

## Claims

1. A data processing system (10) comprising
- a processing unit (12): arranged to execute a program (18) having at least one jump instruction (20) and at least one return instruction (22),
- a first memory (14), and a program stack (24)
- a second memory (16), which is a content addressable memory CAM,
wherein the data processing system (10) is arranged to hardware protect the second memory (16) when a write access to the first memory (14) is executed,
wherein the processing unit (12) is arranged
to store a return address (26) on the program stack (24) and to store a return address copy in the second memory (16) when the at least one jump instruction (20) is executed, and
to compare the return address (26) with the return address copy when the at least one return instruction (22) is executed by
sending an inquiry comprising the return address (26) to the second memory (16), which is arranged to simultaneously search the return address (26) in its content, and
receiving from the second memory (16) a hit value (50), which is indicative of a matching return address copy stored in its content.

2. The data processing unit as claimed in claim 1, wherein the processing unit (12) is arranged to delete the return address copy when the return instruction (22) is completed.

3. The data processing system as claimed in claim 1 or claim 2, wherein the processing unit (12) is arranged to generate an exception message (30) when the return address (26) and the return address copy are not identical.

4. The data processing system as claimed in claim 3, wherein the processing unit (12) is arranged to stop the execution of the program (18) when the processing unit (12) generates the exception message (30).

5. The data processing system as claimed in claim 3 or claim 4, wherein the processing unit (12) is arranged to generate a logfile when the processing unit (12) generates the exception message (30).

6. The data processing unit as claimed in one of the preceding claims, wherein the processing unit (12) continues with the execution of the program (18) before a result of the comparison is completed.

7. A method for operating a data processing system, the system comprising
- a processing unit (12),
- a first memory (14), and
- a second memory (16), which is a content addressable memory CAM,
the method comprising:
hardware protecting the second memory (16) when a write access to the first memory (14) is executed,
executing by the processing unit (12) a program (18) having at least one jump instruction (20) and at least one return instruction (22),
storing by the processing unit (12) a program stack (24) in the first memory (14),
storing by the processing unit (12) a return address (26) on the program stack (24) and a return address copy is stored in the second memory (16), when the at least one jump instruction (20) is executed, and
comparing the return address (26) with the return address copy, when the at least one return instruction (22) is executed by
sending an inquiry comprising the return address (26) to the second memory (16), which is arranged to simultaneously search the return address (26) in its content, and
receiving from the second memory (16) a hit value (50), which is indicative of a matching return address copy stored in its content.

8. The method as claimed in claim 7, further comprising:
continuing with the execution of the program (18) before a result of the comparison is completed.

9. The method as claimed in claim 7 or claim 8, wherein the processing unit (12) generates an exception message (30) when the return address (26) and the return address copy are not identical.

10. The method as claimed in one of claims 7 to 9, wherein the processing unit generates a logfile when the processing unit (12) generates the exception message (30).

11. A computer program product, comprising code portions for performing a method as claimed in any one of claims 7 to 10 when executed by a programmable apparatus

## Patentansprüche

1. Datenverarbeitungssystem (10) mit
- einer Verarbeitungseinheit (12): die dazu eingerichtet ist, ein Programm (18) mit zumindest einem Sprungbefehl (20) und zumindest einem Rückkehrbefehl (22) auszuführen,
- einem ersten Speicher (14) und einem Programmstapel (24)
- einem zweiten Speicher (16), der ein inhaltsadressierbarer Speicher CAM ist,
wobei das Datenverarbeitungssystem (10) dazu eingerichtet ist, für einen Hardwareschutz für den zweiten Speicher (16) zu sorgen, wenn ein Schreibzugang auf den ersten Speicher (14) ausgeführt wird,
wobei die Verarbeitungseinheit (12) dazu eingerichtet ist,
eine Rückkehradresse (26) an dem Programmstapel (24) zu speichern und eine Rückkehradressenkopie in dem zweiten Speicher (16) zu speichern, wenn der zumindest eine Sprungbefehl (20) ausgeführt wird, und
die Rückkehradresse (26) mit der Rückkehradressenkopie zu vergleichen, wenn der zumindest eine Rückkehrbefehl (22) ausgeführt wird, indem
eine Anfrage, die die Rückkehradresse (26) aufweist, zu dem zweiten Speicher (16) gesendet wird, der dazu eingerichtet ist, die Rückkehradresse (26) gleichzeitig in seinem Inhalt zu suchen, und
von dem zweiten Speicher (16) ein Trefferwert (50) aufgenommen wird, der angibt, dass eine übereinstimmende Rückkehradressenkopie in seinem Inhalt gespeichert ist.

2. Datenverarbeitungseinheit gemäß Anspruch 1, wobei die Verarbeitungseinheit (12) dazu eingerichtet ist, die Rückkehradressenkopie zu löschen, wenn der Rückkehrbefehl (22) abgeschlossen ist.

3. Datenverarbeitungssystem gemäß Anspruch 1 oder 2, wobei die Verarbeitungseinheit (12) dazu eingerichtet ist, eine Ausnahmemitteilung (30) zu erzeugen, wenn die Rückkehradresse (26) und die Rückkehradressenkopie nicht identisch sind.

4. Datenverarbeitungssystem gemäß Anspruch 3, wobei die Verarbeitungseinheit (12) dazu eingerichtet ist, die Ausführung des Programms (18) zu stoppen, wenn die Verarbeitungseinheit (12) die Ausnahmemitteilung (30) erzeugt.

5. Datenverarbeitungssystem gemäß Anspruch 3 oder 4, wobei die Verarbeitungseinheit (12) dazu eingerichtet ist, eine Logdatei zu erzeugen, wenn die Verarbeitungseinheit (12) die Ausnahmemitteilung (30) erzeugt.

6. Datenverarbeitungseinheit gemäß einem der vorherigen Ansprüche, wobei die Verarbeitungseinheit (12) die Ausführung des Programms (18) fortsetzt, bevor ein Ergebnis des Vergleiches fertiggestellt ist.

7. Verfahren zum Betreiben eines Datenverarbeitungssystems, wobei das System Folgendes aufweist:
- eine Verarbeitungseinheit (12),
- einen ersten Speicher (14), und
- einen zweiten Speicher (16), der ein inhaltsadressierbarer Speicher CAM ist,
wobei das Verfahren Folgendes aufweist:
einen Hardwareschutz für den zweiten Speicher (16), wenn ein Schreibzugang auf den ersten Speicher (14) ausgeführt wird,
Ausführen eines Programms (18) durch die Verarbeitungseinheit (12), das zumindest einen Sprungbefehl (20) und zumindest einen Rückkehrbefehl (22) hat,
Speichern eines Programmstapels (24) durch die Verarbeitungseinheit (12) in dem ersten Speicher (14),
Speichern einer Rückkehradresse (26) durch die Verarbeitungseinheit (12) an dem Programmstapel (24), und wobei eine Rückkehradressenkopie in dem zweiten Speicher (16) gespeichert wird, wenn der zumindest eine Sprungbefehl (20) ausgeführt wird, und
Vergleichen der Rückkehradresse (26) mit der Rückkehradressenkopie, wenn der zumindest eine Rückkehrbefehl (22) ausgeführt wird, indem
eine Anfrage, die die Rückkehradresse (26) aufweist, zu dem zweiten Speicher (16) gesendet wird, der dazu eingerichtet ist, gleichzeitig die Rückkehradresse (26) in seinem Inhalt zu suchen, und
von dem zweiten Speicher (16) ein Trefferwert (50) aufgenommen wird, der angibt, dass eine übereinstimmende Rückkehradressenkopie in seinem Inhalt gespeichert ist.

8. Verfahren gemäß Anspruch 7, des Weiteren mit:
Fortsetzen der Ausführung des Programms (18), bevor ein Ergebnis des Vergleichs fertiggestellt ist.

9. Verfahren gemäß Anspruch 7 oder 8, wobei die Verarbeitungseinheit (12) eine Ausnahmemitteilung (30) erzeugt, wenn die Rückkehradresse (26) und die Rückkehradressenkopie nicht identisch sind.

10. Verfahren gemäß einem der Ansprüche 7 bis 9, wobei die Verarbeitungseinheit eine Logdatei erzeugt, wenn die Verarbeitungseinheit (12) die Ausnahmemitteilung (30) erzeugt.

11. Computerprogrammprodukt, das Codeabschnitte zum Durchführen eines Verfahrens gemäß einem der Ansprüche 7 bis 10 aufweist, wenn sie durch ein programmierbares Gerät ausgeführt werden.

## Revendications

1. Système de traitement de données (10) comprenant :
- une unité de traitement (12), agencée pour exécuter un programme (18) ayant au moins une instruction de saut (20) et au moins une instruction de retour (22),
- une première mémoire (14), et une pile de programmes (24),
- une seconde mémoire (16), qui est une mémoire adressable par le contenu, CAM,
où le système de traitement de données (10) est agencé pour protéger matériellement la seconde mémoire (16) lorsqu'un accès en écriture à la première mémoire (14) est exécuté,
où l'unité de traitement (12) est agencée
pour stocker une adresse de retour (26) sur la pile de programmes (24) et pour stocker une copie d'adresse de retour dans la seconde mémoire (16) lorsque l'au moins une instruction de saut (20) est exécutée, et
pour comparer l'adresse de retour (26) à la copie d'adresse de retour lorsque l'au moins une instruction de retour (22) est exécutée
en envoyant une requête comprenant l'adresse de retour (26) à la seconde mémoire (16), qui est agencée pour rechercher simultanément l'adresse de retour (26) dans son contenu, et
en recevant de la seconde mémoire (16) une valeur de réponse positive (50), qui est indicative d'une copie d'adresse de retour qui correspond stockée dans son contenu.

2. Unité de traitement de données telle que revendiquée dans la revendication 1, dans laquelle l'unité de traitement (12) est agencée pour supprimer la copie de l'adresse de retour lorsque l'instruction de retour (22) est terminée.

3. Système de traitement de données tel que revendiqué dans la revendication 1 ou la revendication 2, dans lequel l'unité de traitement (12) est agencée pour générer un message d'exception (30) lorsque l'adresse de retour (26) et la copie d'adresse de retour ne sont pas identiques.

4. Système de traitement de données tel que revendiqué dans la revendication 3, dans lequel l'unité de traitement (12) est agencée pour arrêter l'exécution du programme (18) lorsque l'unité de traitement (12) génère le message d'exception (30).

5. Système de traitement de données selon la revendication 3 ou la revendication 4, dans lequel l'unité de traitement (12) est agencée pour générer un fichier journal lorsque l'unité de traitement (12) génère le message d'exception (30).

6. Unité de traitement de données telle que revendiquée dans l'une des revendications précédentes, dans laquelle l'unité de traitement (12) poursuit l'exécution du programme (18) avant qu'un résultat de la comparaison ne soit obtenu.

7. Procédé pour faire fonctionner un système de traitement de données, le système comprenant :
- une unité de traitement (12),
- une première mémoire (14), et
- une seconde mémoire (16), qui est une mémoire adressable par le contenu, CAM,
le procédé comprenant les étapes suivantes :
une protection matérielle de la seconde mémoire (16) lorsqu'un accès en écriture à la première mémoire (14) est exécuté,
l'exécution, par l'unité de traitement (12), d'un programme (18) ayant au moins une instruction de saut (20) et au moins une instruction de retour (22),
le stockage en mémoire, par l'unité de traitement (12), d'une pile de programmes (24) dans la première mémoire (14),
le stockage en mémoire, par l'unité de traitement (12), d'une adresse de retour (26) sur la pile de programmes (24) et le stockage en mémoire d'une copie d'adresse de retour dans la seconde mémoire (16) lorsque l'au moins une instruction de saut (20) est exécutée, et
la comparaison de l'adresse de retour (26) à la copie de l'adresse de retour, lorsque l'au moins une instruction de retour (22) est exécutée
en envoyant une requête comprenant l'adresse de retour (26) à la seconde mémoire (16), qui est agencée pour rechercher simultanément l'adresse de retour (26) dans son contenu, et
en recevant de la seconde mémoire (16) une valeur de réponse positive (50), qui est indicative d'une copie d'adresse de retour qui correspond stockée dans son contenu.

8. Procédé tel que revendiqué dans la revendication 7, comprenant en outre l'étape suivante :
poursuivre l'exécution du programme (18) avant qu'un résultat de la comparaison ne soit obtenu.

9. Procédé tel que revendiqué dans la revendication 7 ou la revendication 8, dans lequel l'unité de traitement (12) génère un message d'exception (30) lorsque l'adresse de retour (26) et la copie d'adresse de retour ne sont pas identiques.

10. Procédé tel que revendiqué dans l'une des revendications 7 à 9, dans lequel l'unité de traitement génère un fichier journal lorsque l'unité de traitement (12) génère le message d'exception (30).

11. Produit programme informatique, comprenant des parties de code pour exécuter un procédé tel que revendiqué dans l'une quelconque des revendications 7 à 10 lorsqu'il est exécuté par un appareil programmable.
